(19) Europäisches Patentamt
European Patent Office
Office européen des brevets

(11) Veröffentlichungsnummer: **0 479 033 A2**

(12) # EUROPÄISCHE PATENTANMELDUNG

(21) Anmeldenummer: **91115750.1**

(22) Anmeldetag: **17.09.91**

(51) Int. Cl.5: **G01N 27/26**, G01N 27/416, G01N 27/403, G01N 27/413

(30) Priorität: **29.09.90 DE 4030873**

(43) Veröffentlichungstag der Anmeldung: **08.04.92 Patentblatt 92/15**

(84) Benannte Vertragsstaaten: **AT BE CH DE DK ES FR GB GR IT LI LU NL SE**

(71) Anmelder: **Conducta Gesellschaft für Mess- und Regeltechnik mbH & Co.**
**Dieselstrasse 24**
**W-7016 Gerlingen b. Stuttgart(DE)**

(72) Erfinder: **Ege, Guido, Dipl.-Chem.**
**Gartenstrasse 6**
**W-7939 Öpfingen(DE)**
Erfinder: **Kohler, Heinz, Dr.rer.nat.**
**Fichtenstrasse 44**
**W-7258 Heimsheim(DE)**

(74) Vertreter: **Otte, Peter, Dipl.-Ing.**
**Tiroler Strasse 15**
**W-7250 Leonberg(DE)**

(54) **Verfahren zur Konzentrationsbestimmung von elektrochemisch umsetzbaren Gasen.**

(57) Zur Konzentrationsbestimmung von elektrochemisch (durch Oxidation oder Reduktion) umsetzbaren Gasen ($CO_2$, CO, $H_2S$, Kohlenwasserstoffe, $NO_X$, $SO_2$ u.dgl.) in einem beliebigen Fluid, wobei das Meßgas (Analyt) durch Zuführung eines Konstantpotentials ($E_2$) zur Arbeitselektrode während eines vorgegebenen Zeitraums ($t_{ads}$) adsorbiert und durch einen anschließenden, rampenförmigen Potentialanstieg (Potentialsweep) eine hieraus resultierende, mit der Konzentration des Meßgases korrelierte Stromzeitfunktion gegen eine Untergrundstromkurve ohne Meßgaseinfluß ausgewertet wird (LPSV-Verfahren), wird vorgeschlagen, dem ersten Meßzyklus einen Referenzzyklus zur Bestimmung des Untergrundstromkurvenverlaufs folgen zu lassen, der sich nach Abfall auf das Ausgangskonstantpotential ($E_2$) an der Arbeitselektrode als ein unmittelbar sich daran anschließender weiterer rampenförmiger Potentialanstieg darstellt, jedoch bei vorhergehender vernachlässigbarer Adsorption des Analyten an der Arbeitselektrode, wodurch diese zweite Messung einer Messung bei fehlendem Meßgas (Analyten) entspricht.

Fig.1

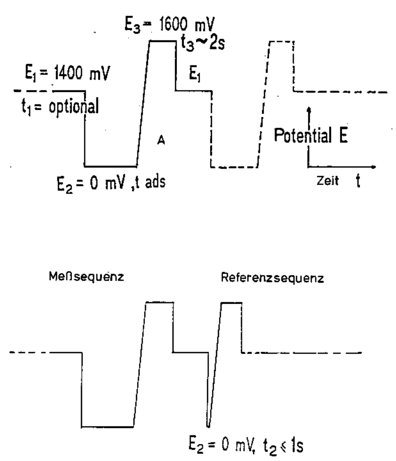


EP 0 479 033 A2

Stand der Technik

Die Erfindung geht aus von einem Verfahren zur Konzentrationsbestimmung von elektrochemisch umsetzbaren Gasen nach dem Oberbegriff des Anspruchs 1.

Bekannt ist ein solches Verfahren aus den US-Patentschriften 4 508 598 bzw. 4 729 824. Vorauszuschicken ist in diesem Zusammenhang, daß übliche gegenwärtig verwendete elektrochemische Gassensoren entweder vom potentiometrischen oder vom polarographischen Typ sind.

Polarographische oder mit diesem vergleichbare Gassensoren basieren auf einer Strommessung zwischen einer aus zwei oder drei Elektroden bestehenden Elektrodenkonfiguration, wobei die Stromamplitude ein Maß für den Partialdruck des Meßgases ist. Bei diesen Sensoren ergeben sich in Verbindung mit geringer Selektivität als weitere Nachteile eine ebenfalls nur geringe Empfindlichkeit sowie zum Teil erhebliche Drifterscheinungen.

Es ist ferner üblich, amperometrische Gasdetektionszellen mit einem festen Potential zu betreiben, wobei der unter diesen Umständen resultierende Strom auf die Membrandiffusion begrenzt werden kann. Er hängt dann linear von der Konzentration des elektroaktiven Analyten ab, der bei einem jeweils spezifischen Arbeitspotential umgewandelt wird (Sensor vom sogenannten "Typ 1"). Da nun aber jede Spezies umgewandelt wird, vorausgesetzt, sie ist bei dem angelegten Arbeitspotential elektroaktiv, ergibt sich bei solchen bekannten amperometrischen Gasdetektionszellen üblicherweise nur eine relativ niedrige Selektivität, auch wenn man darauf abstellt, die entsprechenden elektrochemischen Sensoren nur bei solchen Potentialen zu betreiben, bei denen wenigstens eine größere Anzahl anderer vorhandener Substanzen nicht elektroaktiv reagiert.

Eine weitere Möglichkeit, dem Problem der niedrigen Selektivität zu begegnen, besteht darin, daß man verschiedene Sensoren mit unterschiedlichen Selektivitäten durch Wahl von Arbeitspotential und/oder Elektrodenmaterial etwa in Form einer ganzen Sensorreihe anordnet und entsprechende Techniken zur Unterscheidung der jeweiligen Substanzen anwendet (Typ 2 Sensor).

Hier setzt nun der aus den beiden weiter vorn genannten US-Patenten 4 508 598 oder 4 429 824 gemachte Vorschlag ein, der darin besteht, daß man bei Vorhandensein nur eines Sensors die Selektivität durch sogenannte voltammetrische Techniken erhöht. Hierdurch gelingt die Trennung der Spezies, die üblicherweise bei einem Festpotential umgewandelt werden, durch deren aufeinanderfolgende Umwandlung im Verlauf eines rampenförmigen Spannungsanstiegs (potential sweep). Diese Konzeption macht allerdings Spezien mit Umwandlungspotentialen erforderlich, die zur einwandfreien Auflösung energetisch einen hinreichenden Abstand aufweisen müssen.

Eine weitere Möglichkeit zur Selektivitätserhöhung beruht auf der Ausnutzung elektrokatalytischer Effekte und spezifischer Adsorptionseigenschaften. Indem man hier geeignete Elektrodenmaterialien auswählt, wird bevorzugt der Analyt adsorbiert, während sich für in diesem Bereich ebenfalls reagierende Spezien oder Gase hohe Überpotentiale ergeben. Diese elektrolytischen Effekte lassen sich am besten durch Anwendung der erwähnten voltammetrischen Techniken ausnutzen, indem man zunächst mit einem Festpotential und einer aus diesen herrührenden kontrollierten Adsorption arbeitet und anschließend die Arbeitselektrode mit einem rampenförmigen Spannungsanstieg beaufschlagt. Dieses Verfahren wird im folgenden als sogenanntes LPSV-Verfahren bezeichnet und leitet sich aus der englischen Bezeichnung "linear potential sweep voltammetry" ab.

Zusammengefaßt beruht also das LPSV-Verfahren darauf, daß man die Arbeitselektrode zunächst mit einem Festpotential ($E_2$; beispielsweise Null-Potential) betreibt, während einer vorgegebenen Adsorptionszeit $t_{ads}$, um so den Analyten unter thermodynamisch und diffusionskontrollierten Bedingungen zu adsorbieren.

Durch Veränderung der Adsorptionszeit $t_{ads}$ kann man schon an dieser Stelle eine gewisse Selektivität einführen aufgrund des unterschiedlichen Adsorptionsverhaltens verschiedener Gase. In einem zweiten, die Selektivität entscheidend beeinflussenden Schritt wird dann in einem sich an die Adsorptionszeit anschließenden linearen Spannungsanstieg an der Arbeitselektrode die adsorbierte Spezies elektrochemisch umgewandelt.

Dies führt zu von den Konzentration des Meßgases und seiner Art abhängigen Stromantworten, so daß sich ein Stromverlauf über der Zeit und bezogen auf den rampenförmigen Potentialanstieg der Arbeitselektrode ergibt, wie er beispielsweise in Fig. 14 des US-Patents 4 729 824 oder auch Fig. 18 des US-Patents 4 508 598 jedenfalls qualitativ dargestelllt ist. Man kann dann durch Integration der sich während des Potentialsweeps ergebenden Peakflächen des Stroms über den Spannungsverlauf auf die Konzentration des Analyten rückschließen, vorausgesetzt, man führt eine stets notwendige Untergrundsubtraktion noch aus, um die ermittelten Strompeakflächen auf den Stromkurvenverlauf zu beziehen, der sich dann ergibt, wenn der Analyt im untersuchten Fluid (Gas oder Flüssigkeit) nicht vorhanden ist. Für die Messung von CO, auf

die sich das US-Patent 4 508 598 hauptsächlich bezieht, wird in dieser Veröffentlichung auch ausdrücklich darauf hingewiesen (Spalte 6, Zeilen 48/50), daß die Subtraktion der Untergrundladung bei fehlendem Analyten für die Integration der ermittelten Ladung und der daraus resultierenden Konzentrationsableitung notwendig ist. Dies bedeutet, daß in nicht selten problematischer Weise, soweit dies überhaupt möglich ist, der Untergrund dadurch aufgenommen werden muß, daß durch Betätigung entsprechender Ventile der Analyt aus dem Meßfluid ausgeschlossen oder entfernt wird, oder der Sensor selbst in ein anderes Gefäß umgesetzt werden muß, in welchem der Analyt nicht vorhanden ist.

Dementsprechend liegt der vorliegenden Erfindung die Aufgabe zugrunde, hier Abhilfe zu schaffen und eine Möglichkeit zur einwandfreien Bestimmung eines Untergrund- oder Nullsignalwertes anzugeben, bei der jeglicher Wechsel des Meßmilieus überflüssig wird und vor allem auf alle sonst notwendigen mechanischen Hilfsmittel wie Ventile, Sensoraustausch o.dgl. verzichtet werden kann.

## Vorteile der Erfindung

Die Erfindung löst diese Aufgabe mit den kennzeichnenden Merkmalen des Anspruchs 1 und hat den Vorteil, daß problemlos und unmittelbar einem Meßzyklus oder einer Meßsequenz folgend eine weitere Potentialsequenz durchgeführt werden kann, die mit hoher Genauigkeit das gewünschte Nullsignal ergibt, ohne daß mechanisch an der Meßapparatur überhaupt etwas geändert zu werden braucht und ohne daß vor allen Dingen der Analyt aus dem Meßmilieu entfernt zu werden braucht.

Die Erfindung beruht nämlich auf der Erkenntnis, daß genügend kurze Adsorptionszeiten eingestellt werden können, während denen nur so wenig Analyt adsorbieren kann, daß die damit korrelierte Ladungsmenge vernachlässigbar ist.

Die Erfindung macht sich diese Erkenntnis zunutze und schlägt daher vor, unmittelbar nach dem Meßzyklus (Adsorptionspotential während $t_{ads}$ mit anschließendem Potentialsweep) folgend einen erneuten Potentialsweep einzuleiten, der einer Referenzsequenz zugeordnet werden kann und dessen Stromantwort notwendigerweise so ausfällt, als wenn der Analyt gar nicht in der Lösung oder in dem zu untersuchenden Gasgemisch vorhanden ist, eben deshalb, weil er keine Zeit hatte, sich an der Arbeitselektrode anzulagern bzw. zu adsorbieren.

Untersuchungen haben ergeben, daß es hierdurch gelingt, einen Nullsignal-Kurvenverlauf zu ermitteln, der mit hoher Genauigkeit einem Kurvenverlauf des gleichen Sensors entspricht, wenn der Analyt tatsächlich nicht vorhanden ist, so daß es durch rein elektrochemische/elektronische Mittel, nämlich Einteilung des Meßvorgangs in eine Meßsequenz und eine sich daran anschliessende Referenzsequenz, möglich ist, sowohl die durch das Adsorptionsverhalten des Analyten belastete und daher konzentrationsabhängige Stromantwort als auch das Untergrundsignal zu gewinnen, so daß es durch Subtraktionsbildung der beiden Kurvenverläufe und anschließende Integration möglich ist, mit hoher Genauigkeit und praktisch in einem Meßvorgang die Konzentration des gewünschten Analyten herauszurechnen.

Durch die in den Unteransprüchen aufgeführten Maßnahmen sind vorteilhafte Weiterbildungen und Verbesserungen der Erfindung möglich. Besonders vorteilhaft ist die zur Verfügungstellung einer sehr geringen Zeitdauer $t_{ads}$ (beispielsweise in numerischen, jedoch die Erfindung nicht beschränkenden Werten ausgedrückt von 1 Sekunde) in der sich an die Meßsequenz anschließenden Referenzsequenz bei Konstantpotential($E_2$, wobei $E_2$ beispielsweise 0 mV sein kann), um störende kapazitive Entladungsphänomene an der Elektrode auszuschalten. Die im Vergleich zu üblichen Adsorptionszeiten extrem geringe Wartezeit bis zum Beginn des Referenzsweeps eliminiert diesen "Kapazitäts"-Einfluß der Elektrode, da ein entsprechendes, hierauf zurückzuführendes Potential mit einer e-Funktion innerhalb weniger Sekundenbruchteile abfällt.

Vorteilhaft ist ferner, daß eine Aktivitätsbestimmung der Sensoroberfläche möglich ist durch Vergleich der sich ergebenden Stromkurvenverläufe, auch als Summensignal, wenn mehrere zu untersuchende Meßgase beteiligt sind, über der Zeit, indem man die anfänglichen Peakhöhen oder Peakflächen (charakteristische Doppelpeakbildung; PtH), die bei Beginn des Potentialsweeps auftreten, entsprechend auswertet und über der Zeit beobachtet. Hieraus läßt sich eine Angabe über die Langzeitstabilität des Sensors ermitteln, wobei bevorzugt der Verlauf des Referenzzyklus gewählt wird, da sich in diesem Fall eine Sensoroberflächenbelegung durch Wasserstoff, herrührend aus dem wässrigen Milieu ergibt, und diese Wasserstoffpeaks umso höher sind, je aktiver die Sensoroberfläche (noch) ist.

## Zeichnung

Ausführungsbeispiele der Erfindung sind in der Zeichnung dargestellt und werden in der nachfolgenden Beschreibung näher erläutert. Es zeigen:

Fig. 1 im oberen Diagramm einen möglichen Potentialverlauf für intermittierende, aufeinanderfolgende Meßzyklen unter Zugrundelegung des bekannten LPSV-Verfahrens und das untere Diagramm einen gemäß vorliegender Erfindung modifizierten Potentialverlauf an der Arbeitselektrode, bei dem sich an eine Meßsequenz eine Referenzsequenz im LPSV-Verfahren zur Untergrundbestimmung anschließt;

Fig. 2 ein mögliches Ausführungsbeispiel einer thermostatisch geregelten Meßzelle zur Durchführung des modifizierten LPSV-Verfahrens;

Fig. 3 als ausgewähltes Ausführungsbeispiel den Verlauf der CO-Adsorption über der Adsorptionszeit und

Fig. 4 zwei verschiedene Stromkurvenverläufe (bezogen auf eine Meßsequenz und eine sich daran anschließende Referenzsequenz) über der Arbeitsspannung in mV bei einer Anstiegsrate von 1000 mV/s und

Fig. 5 durch Integration der Meßkurven wie in Fig. 4 dargestellt erhaltene CO-Signale (weiße Symbole) und PtH-Signale (schwarze Symbole) über der Konzentration von gelöstem CO ohne und mit 1 % $H_2$, wie an den Kurvenverläufen angegeben.

Beschreibung der Ausführungsbeispiele

Entsprechend der Darstellung der Fig. 2 enthält eine thermostatisch auf eine vorgegebene Temperatur geregelte elektrochemische Zelle 10 eine Arbeitselektrode 11, eine Referenzelektrode 12, weitere, hier nicht genauer interessierende Elektroden 13a, 13b für eine Vorelektrolyse sowie eine Gaseinlaßleitung 14. Der Aufbau der elektrochemischen Zelle kann sich noch durch einen von außen beispielsweise durch elektromagnetische Kopplung angetriebenen Rührstab 15 vervollständigen.

Die Arbeitselektrode umfaßt ein poliertes polykristallines Platinblech 11b, an welchem sich die Adsorptions- und Umwandlungsvorgänge abspielen; bei der Referenzelektrode 12 kann es sich um eine übliche Standard-Wasserstoffelektrode oder um ein anderes übliches Referenzsystem handeln, wobei sowohl die Platinoberfläche als auch die Referenzelektrode gegenüber dem Zellenelektrolyten über Diaphragmen abgetrennt sein können. Dabei beziehen sich alle im folgenden noch angegebenen Potentiale auf das von der Referenzelektrode gelieferte Referenzsignal.

Einer elektrisch mit den Anschlüssen der Arbeitselektrode und der Referenzelektrode verbundenen Spannungssteuer- und Stromauswerteschaltung 15 wird von einem Funktionsgenerator 16 zur Durchführung des LPSV-Verfahrens ein Potentialverlauf zugeführt, der als Beispiel in dem sich unter dem Funktionsgenerator 16 befindenden Kreis angegeben ist; eine die von der Spannungssteuerschaltung 15 gelieferten Daten auswertende Auswerteschaltung 17 erfaßt dann mindestens die beiden Spannungsverläufe der Meß- und Referenzsequenz im Bereich der Stromantwort und leitet aus diesen beiden Signalen eine Angabe über die Konzentration des zu untersuchenden Analyten ab.

Dabei wird entsprechend dem Spannungsverlauf im oberen Diagramm der Fig. 1 die Arbeitselektrode zunächst bei einem Potential $E_1$ ($E_1$ = 1400 mV) betrieben. Hieraus ergibt sich ein eingeschwungener Stromzustand, der diffusionsbegrenzt für die festzustellende Spezies ist - dies betrifft insoweit die weiter vorn schon beschriebene Methode des "Typ 1"-Sensors. Da der Analyt sowie sonst noch vorhandene störenden Spezien vollständig umgewandelt sind, sind ihre Konzentrationen an der Elektrodenoberfläche Null. Anschließend wird ein Konstantpotential $E_2$ für eine vorgegebene Adsorptionszeit $t_{ads}$ vorgegeben, mit üblicherweise $E_2$ = 0 mV. Bei diesem Potential ist der Analyt elektrochemisch nicht aktiv. Es ergibt sich aber eine chemische Adsorption an der Elektrodenoberfläche in diesem Zustand von Elektrode und Spannungsverteilung, mit einem Verlauf über der Zeit, wie dies in Fig. 3 dargestellt ist, auf die weiter unten noch eingegangen wird.

An diese spezifisch vorgegebene Adsorption (vorgegeben durch die Dauer der Adsorptionszeit $t_{ads}$, wodurch sich nämlich auch ein bestimmtes Selektivitätsverhalten auf unterschiedliche Spezies realisieren läßt) folgt dann der lineare Potentialsweep entsprechend dem Kurvenverlauf A, also ein vergleichsweise steiler rampenförmiger Potentialanstieg an der Arbeitselektrode bis zu einem Endpotential $E_3$, wobei auch hier wieder numerische, den Rahmen der Erfindung aber nicht beschränkende Werte angegeben werden, mit $E_3$ also beispielsweise 1600 mV. Die Sweeprate, also die Zeit für den rampenförmigen Spannungsanstieg liegt bei beispielsweise 1000 mV/s; die Sweepraten müssen so schnell sein, damit die Diffusion von sich in der Lösung befindenden Spezien zur Elektrode vernachlässigt werden kann. Unter diesen Umständen ist beispielsweise ein 2eV Sweep beendet, bevor weitere Spezien durch die nernst'sche Schicht diffundieren können.

Ein solcher erzwungener Spannungsverlauf an der Arbeitselektrode entsprechend einer Meßsequenz führt zu einem Stromkurvenverlauf, wie er in Fig. 4 bei I dargestellt ist, d.h. es ergeben sich anfänglich zwei

niedrigere Peaks, die bei etwa 80 und 220 mV liegen, mit einem nachfolgenden, von der Konzentration der Analyten (CO) abhängenden Umsetzungspeak bei ca. 880 mV. Die anfänglichen Peaks im Stromverlauf sind auf eine Restbelegung der vom Analyten nicht besetzten Adsorptionsplätzen mit Wasserstoff zurückzuführen; sie sind zunehmend abgeschwächt proportional zur Konzentration des Meßgases; dementsprechend ist in Abhängigkeit zur Konzentration die sich daran anschließende Peakform (bei 880 mV) umso höher und ausgeprägter, je stärker die Konzentration des Analyten im Meßmilieu ist - betrifft in Fig. 4 speziell zunächst CO.

Um die Elektrodenoberfläche nach Durchführung des linearen Potentialsweeps rückzusetzen, kann sich, wie auch in Fig. 1 gezeigt, an den rampenförmigen Spannungsanstieg die Beibehaltung des oberen Konstantpotentials $E_3$ für einen vorgegebenen Zeitraum, beispielsweise $t_3 \approx 2$ sec. anschließen.

Allerdings ergibt der Stromkurvenverlauf I keinen absoluten Wert über die Konzentration des Analyten, da die Integration der Stromflächen notwendigerweise auf den Untergrund, also auf einen Nullsignalverlauf bezogen werden muß.

Daher schließt sich entsprechend dem Kurvenverlauf im unteren Teil der Fig. 1 an die Meßsequenz eine Referenzsequenz an, die in ihrem allgemeinen Spannungsverlauf identisch zur Meßsequenz sein kann mit der Ausnahme, daß eine Adsorptionszeit $t_{ads}$, in der die vorhandenen Spezies merklich adsorbieren können, nicht zugelassen wird; diese ist also so klein bzw. verschwindet vollkommen, daß jede Adsorption sowohl des Analyten als auch sonstiger störender Spezien im Meßmilieu ausgeschlossen ist. Daher kann bei einem typischen Ausführungsbeispiel die Zeitdauer, bei welcher die Arbeitselektrode auf dem unteren Konstantpotential von $E_2$ verweilt, kleiner oder gleich groß 1 sec. sein ($t_2 \leqq 1$ s). Unter diesen Umständen ergibt sich, da eine Analytenladung an der wirksamen Oberfläche der Arbeitselektrode nicht auftritt, ein zur Stromkurve I erheblich unterschiedlicher Verlauf I', tatsächlich also ein Nullsignalverlauf, der dem entspricht, der sich ergeben würde, wenn der Analyt sich gar nicht im Meßfluid befindet.

In diesem Fall sind die auf den Wasserstoffeinfluß zurückzuführenden beiden anfänglichen Peaks wesentlich ausgeprägter, während ein Umsetzungspeak nur in dem Maße auftritt, wie dies der zu erwartenden $OH^-$-Adsorption entspricht, nämlich eine nicht aufgelöste Doppelpeakbildung bei ca. 975 und ca. 1050 mV.

Man gelangt dann zur Konzentration des Analyten, indem man die Stromverläufe des Meß- und Referenz-Sweep voneinander subtrahiert und die sich ergebende Differenzkurve anschließend im Bereich der Umsetzung des Analyten integriert.

Die dargestellten Kurvenverläufe beziehen sich speziell auf eine CO-Adsorption als Analyten, wobei solche Kurvenverläufe qualitativ auch für sonstige interessierende, elektrochemisch umwandelbare Gase gelten, deren Peaks dann lediglich bei anderen Potentialwerten auftreten.

Betrachtet man allgemein die konzentrationsabhängige Adsorption von CO an einem polykristallinen Platinblech im Verlauf eines solchen LPSV-Verfahrens, dann wird CO bei einem Potential von 0 mV adsorbiert und bei einem sich anschließenden linearen Potentialsweep entsprechend den folgenden Gleichungen oxidiert:

$$CO + Pt(subs) \longrightarrow CO\text{-}Pt(subs) \qquad (I)$$

$$OH^- + Pt(subs) \longrightarrow HO\text{-}Pt(subs) + e^- \qquad (>700\ mV) \qquad (II)$$

$$CO - Pt(subs) + HO\text{-}Pt(subs) \longrightarrow CO_2 + 2Pt(subs) + e^- + H^+ \qquad (800\text{-}1100\ mv) \qquad (III)$$

Hierbei ergibt sich auf Platin eine hohe Überspannung der CO-Oxidation, das dann, wenn adsorbiertes OH ($E > 700$ mV) beteiligt ist, lediglich zu $CO_2$ aufoxidiert wird (Gleichung III).

Demnach kann das Reaktionspotential im Bereich von 800 bis 1100 mV erwartet werden.

Zur genaueren Information wird in diesem Zusammenhang verwiesen auf die Darstellung der Fig. 3, der die Zeitabhängigkeit der CO-Adsorption (Ladung über $t_{ads}$) entnommen werden kann. Fig. 3 zeigt also zum besseren Verständnis der Adsorptionskinetik typische Ergebnisse für verschiedene Adsorptionszeiten. Hinzuzufügen ist, daß die Adsorptionsrate stark von geometrischen Einflüssen sowie Rührvorgängen im Gefäß und natürlich auch von der freien Adsorptions-Entalpie abhängig ist.

Es ist darauf hinzuweisen, daß der in Fig. 4 dargestellte typische Stromverlauf (bezeichnet mit I) bei linearem Potentialsweep nach Erreichen eines thermodynamischen Gleichgewichts im Adsorptionsverhalten von CO, also bei Adsorptionsverhalten von $t_{ads} \geqq 100$ s gewonnen worden ist.

Ein genaueres Eingehen auf die ablaufenden Mechanismen ergibt folgendes. Wasserstoff wird während

eines LPSV-Sweeps zwischen 0 und 400 mV mit einem PtH-Desorptionspeak desorbiert, der durch zwei energetisch unterschiedliche Adsorptionszustände charakterisiert ist. Dem CO-Peak ist ein nicht trennbarer Doppelpeak überlagert, der zwischen 800 und 1200 mV auftritt und der der $OH^-$-Adsorption entspricht, was auch in Fig. 4 dargestellt ist.

Die gesamte der Umwandlung von CO zugeordnete elektrische Ladung läßt sich durch Peakintegration über die Zeit bestimmen, wobei in dem Maße, in welchem die CO-Peaks größer werden, die PtH-Peaks im Verlauf des Ersatzes des adsorbierten Wasserstoffes durch Kohlenmonoxid abnehmen. Daher läßt sich die Konzentration von CO entweder unter Benutzung der CO-Adsorption- oder der PtH-Verdrängungs-Kurvenverläufe bestimmen. Dabei muß angenommen werden, daß keine störenden Spezien mit ähnlichen Adsorptionseigenschaften auftreten. Die Ergebnisse beider Möglichkeiten, die man für eine sich im thermodynamischen Gleichgewicht befindende CO-Adsorption bei Adsorptionszeiten von $t_{ads}$ = 100 s gewinnt, sind in Fig. 5 gezeigt. Beide Konzentrationskurvenverläufe sind eng korreliert; der Integrationsfehler liegt in der Größenordnung von beispielsweise 5 %. Innerhalb dieser Grenzen ergeben sich zufriedenstellende Übereinstimmungen der konzentrationsabhängigen Adsorption.

In Gegenwart von Wasserstoff können, wie Fig. 5 zeigt, keine wesentlichen Änderungen der Peakströme beobachtet werden. Dies weist auf die besonders selektive Bestimmung von CO hin. Eine solche hohe Selektivität läßt sich auch aufgrund theoretischer Überlegungen erwarten, Wasserstoff wird an der Elektrode mit hoher Adsorptionsrate adsorbiert und wird an der Pt-Oberfläche zur Bildung von PtH zu atomaren Wasserstoff dissoziiert. Die Belegung von PtH, die durch molekularen Wasserstoff gebildet wird, kann jedoch von der Wasserstoffbelegung, die aus der Dissoziation von Wasser resultiert, nicht unterschieden werden. Dabei können aufgrund der schnellen Sweepraten von $H_2$ resultierende Diffusionsströme ausgeschlossen werden, wie sie mit Sensoren vom Typ 1 und vom Typ 2 gemessen werden. Dies bedeutet, daß Störungen durch molekularen Wasserstoff nahezu vollständig eliminiert sind.

Es gelingt also, die Selektivität amperometrischer Gasdetektionszellen durch spezifische Adsorptionsvorgänge in Verbindung mit einem modifizierten LPSV-Verfahren, auch zur Untergrundbestimmung, wesentlich zu verbessern.

Es versteht sich, daß die geschilderten Maßnahmen auch die selektive Detektion von mehr als nur einer Spezie mit lediglich einem Sensor möglich machen, insbesondere wenn man für deren Trennung ihre thermodynamischen Eigenschaften durch Variation der Adsorptionszeit $t_{ads}$ zugrundelegt.

Ein weiterer wesentlicher Gesichtspunkt bei vorliegender Erfindung besteht darin, daß eine Abschätzung der Elektrodenqualität durch Beobachtung der in Fig. 4 dargestellten Stromkurven möglich ist, so daß eine mögliche Abnahme der Elektrodenempfindlichkeit über der Zeit erfaßt und diese als Korrekturparameter für die Sensorempfindlichkeit eingeführt oder als Maß herangezogen werden kann, wann ein Auswechseln der Elektrode sinnvoll ist. Tatsächlich stellen jedenfalls die anfänglichen Peaks im Stromkurvenverlauf, die auf Wasserstoffumsetzung zurückzuführen sind, ein gutes Maß für die Elektrodenalterung dar, da eine hohe Elektroden-Oberflächenaktivität mit entsprechend hohen Peaks zusammengeht, wie sie insbesondere bei der Untergrundbestimmung auftreten. Verglichen mit früheren Messungen ergibt sich hierdurch eine Aussage, wie aktiv die Oberfläche der Elektrode (noch) ist; einer solchen Überwachung der Langzeitstabilität der Elektrode kann natürlich auch ein Summensignal zur Auswertung zugrundegelegt werden, wobei man auf den Referenzzyklus, auf den Meßzyklus oder auf beide abstellen kann.

Abschließend wird darauf hingewiesen, daß die Ansprüche und insbesondere der Hauptanspruch Formulierungsversuche der Erfindung ohne umfassende Kenntnis des Stands der Technik und daher ohne einschränkende Präjudiz sind. Daher bleibt es vorbehalten, alle in der Beschreibung, den Ansprüchen und der Zeichnung dargestellten Merkmale sowohl einzeln für sich als auch in beliebiger Kombination miteinander als erfindungswesentlich anzusehen und in den Ansprüchen niederzulegen.

## Patentansprüche

1. Verfahren zur Konzentrationsbestimmung von elektrochemisch (durch Oxidation oder Reduktion) umsetzbaren Gasen ($CO_2$, CO, $H_2S$, Kohlenwasserstoffe, $NO_X$, $SO_2$ u.dgl.) in einem beliebigen Fluid, indem man das Meßgas (Analyt) durch Zuführung eines Konstantpotentials ($E_2$) zur Arbeitselektrode während eines vorgegebenen, hinreichend langen Zeitraums ($t_{ads}$) an deren Elektrodenfläche adsorbiert und durch einen sich daran anschließenden, rampenförmigen Potentialanstieg (Potentialsweep) eine hieraus resultierende, mit der Konzentration des Meßgases korrelierte Stromzeitfunktion gegen eine Untergrundstromkurve (ohne Meßgaseinfluß) auswertet (LPSV-Verfahren), dadurch gekennzeichnet, daß man diesem ersten Meßzyklus einen Referenzzyklus zur Bestimmung des Untergrundstromkurvenverlaufs folgen läßt, der sich nach Abfall auf das Ausgangskonstantpotential ($E_2$) an der Arbeitselektrode als ein unmittelbar sich daran anschließender weiterer rampenförmiger Potentialanstieg darstellt, bei

vorhergehender vernachlässigbarer Adsorption des Analyten an der Arbeitselektrode derart, daß diese zweite Messung einer Messung bei fehlendem Meßgas (Analyten) entspricht.

**2.** Verfahren nach Anspruch 1, dadurch gekennzeichnet, daß eine sehr kurze Zeitdauer ($t_2$) vor Einleitung des Referenz-Potentialanstiegs abgewartet wird, deren Dauer sich aus der Notwendigkeit der Beibehaltung vernachlässigbarer Adsorptionserscheinungen an der Elektrode einerseits und des innerhalb von Sekundenbruchteilen auftretenden Kapazitätsabbaus an der Elektrodenoberfläche andererseits bestimmt ($t_2 \leqq 1$ s).

**3.** Verfahren nach Anspruch 1 oder 2, dadurch gekennzeichnet, daß zur Signalauswertung in Verbindung mit der Konzentrationsbestimmung des Analyten nach der Untergrundsubtraktion eine Integration der Peakflächen vorgenommen wird.

**4.** Verfahren nach einem oder mehreren der Ansprüche 1 bis 3, dadurch gekennzeichnet, daß zur Überwachung der Langzeitstabilität (Elektrodenempfindlichkeit) die sich aus dem Vergleich älterer mit jüngeren Stromkurvenverläufen (gespeicherte und neu aufgenommene Werte) ergebende Elektrodenaktivität beobachtet und die daraus resultierende Information als Korrekturwert für das Sensorsignal dient bzw. als Maß (Warnsignal) herangezogen werden kann, wann ein Elektrodenaustausch notwendig ist.

**5.** Verfahren nach Anspruch 4, dadurch gekennzeichnet, daß für die Langzeitstabilitätsüberwachung Nullkurvenverläufe entsprechender Referenzzyklen verwendet werden.

**6.** Verfahren nach Anspruch 4 oder 5, dadurch gekennzeichnet, daß der Überwachung der Langzeitstabilität ein Summensignal bei Vorhandensein mehrerer Spezies im Meßmilieu zugrundegelegt wird.

**7.** Verfahren nach einem oder mehreren der Ansprüche 1 bis 6, dadurch gekennzeichnet, daß zur Selektivitätserhöhung die im Meßzyklus vorgesehene Adsorptionszeit ($t_{ads}$) variiert wird.

Fig.1

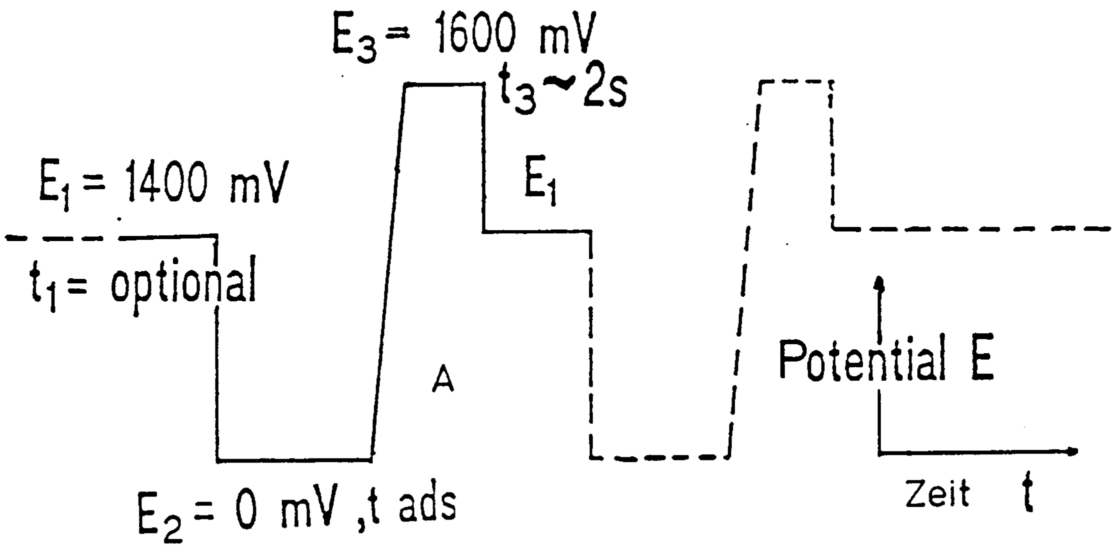
E3 = 1600 mV
t3 ~ 2s
E1 = 1400 mV
E1
t1 = optional
A
Potential E
E2 = 0 mV ,t ads
Zeit t

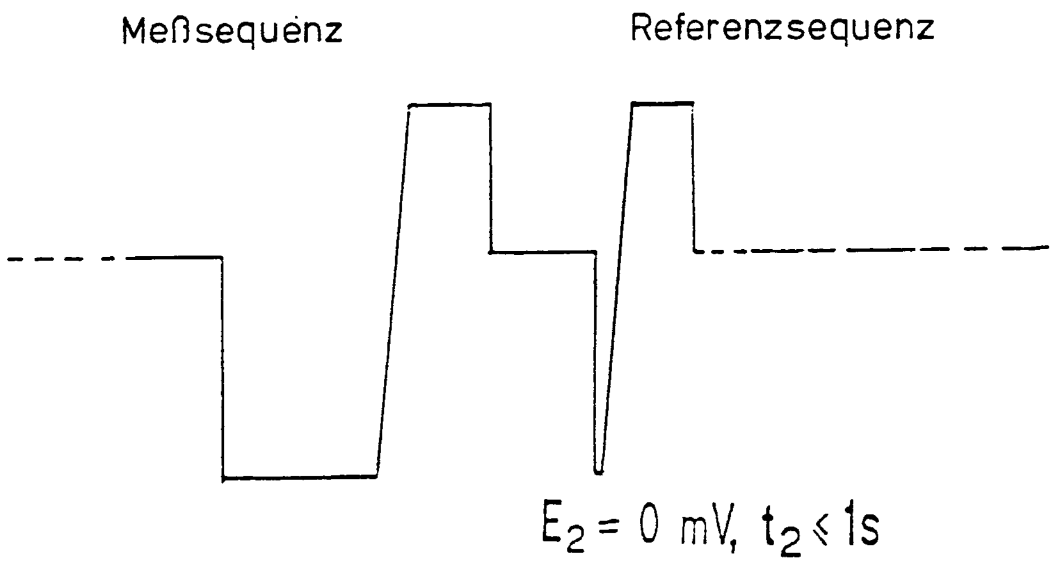
Meßsequenz
Referenzsequenz
E2 = 0 mV, t2 ≤ 1s

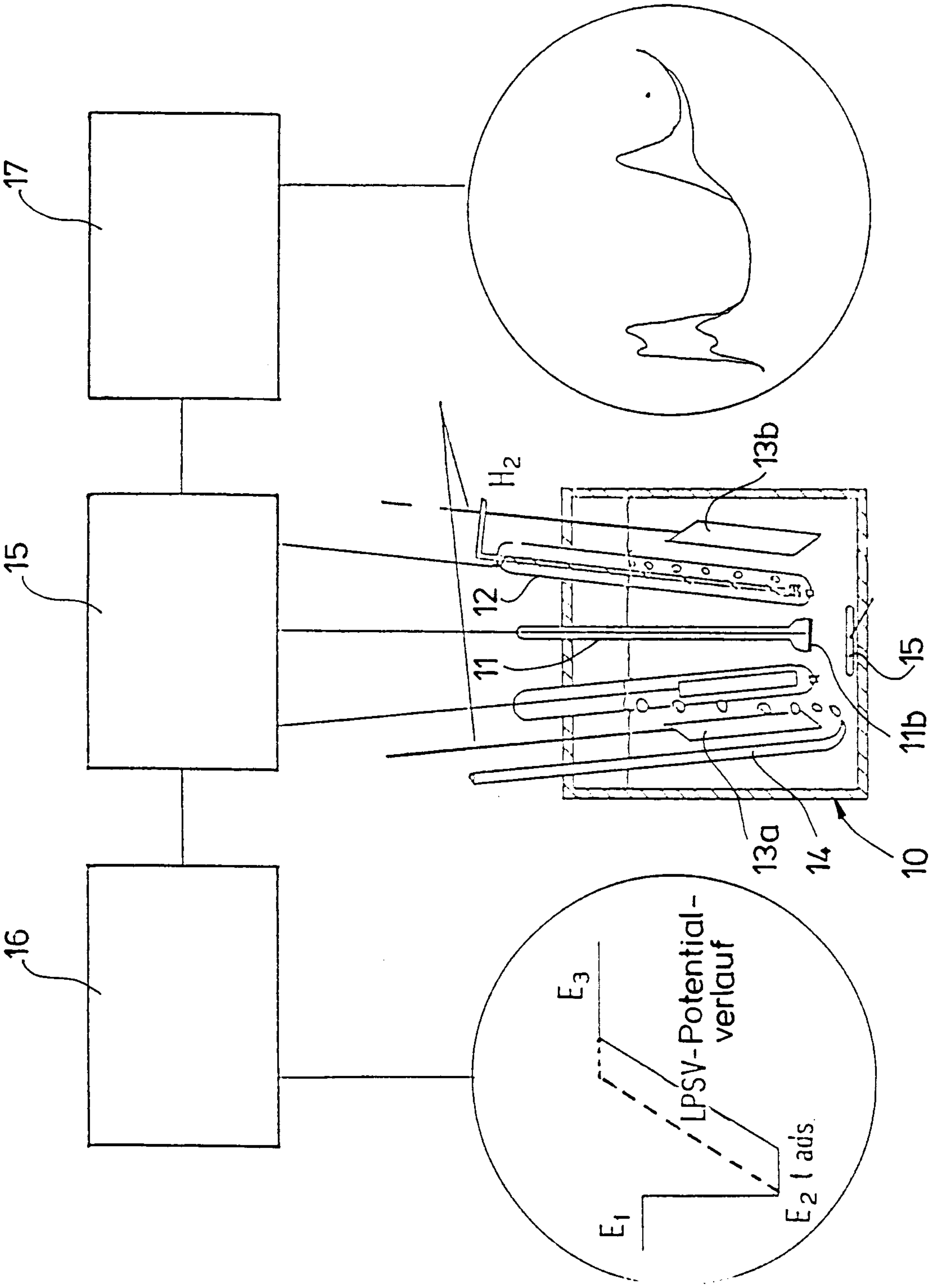

16
15
17
H$_2$
I
13b
12
11
15
11b
13a
14
10
E$_1$
E$_2$
E$_3$
t ads
LPSV-Potential-verlauf


Fig.2

Fig.3

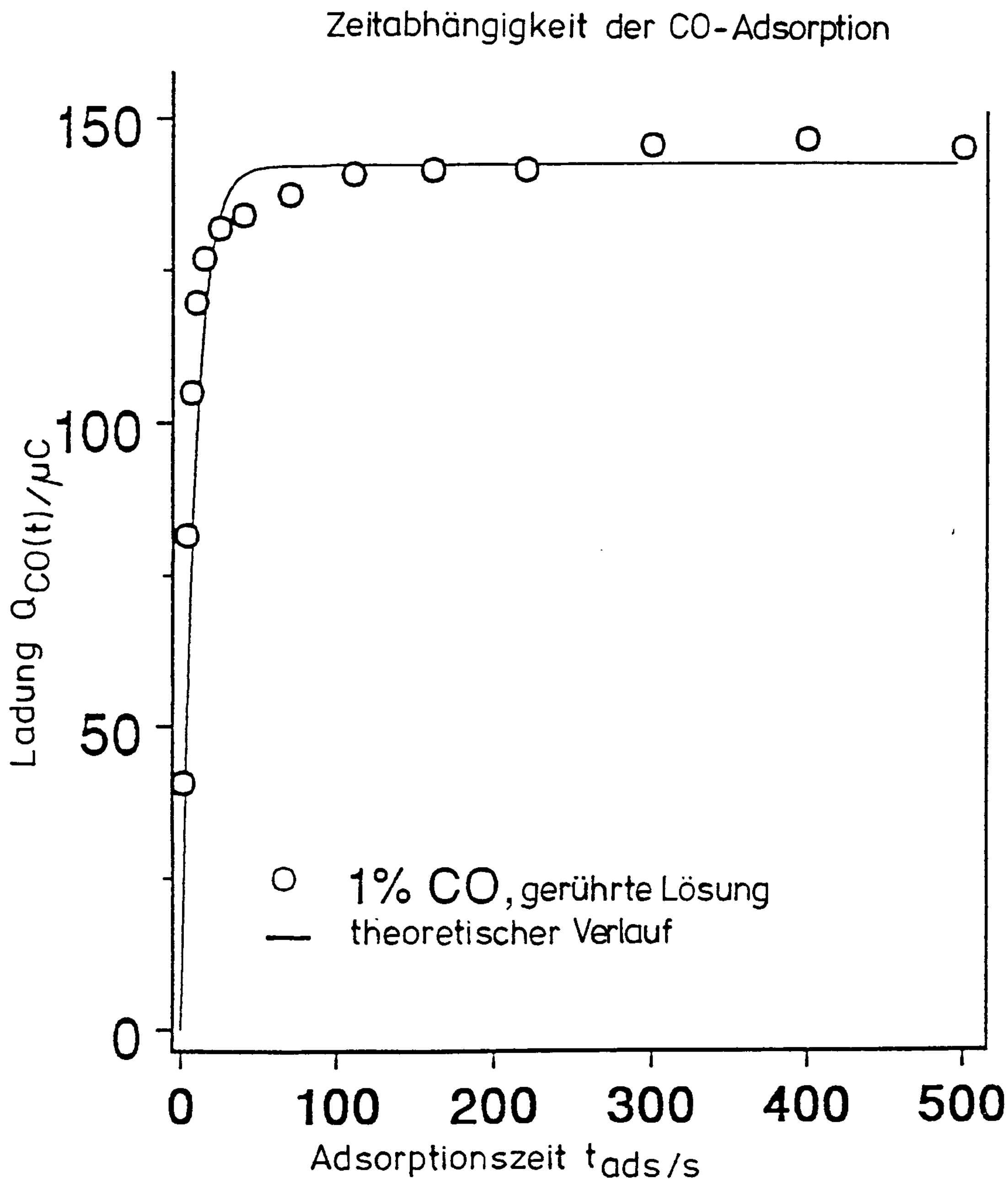
Zeitabhängigkeit der CO-Adsorption
150
100
50
0
Ladung $Q_{CO(t)}/\mu C$
0
100
200
300
400
500
Adsorptionszeit $t_{ads}/s$
1% CO, gerührte Lösung
theoretischer Verlauf

Fig.4

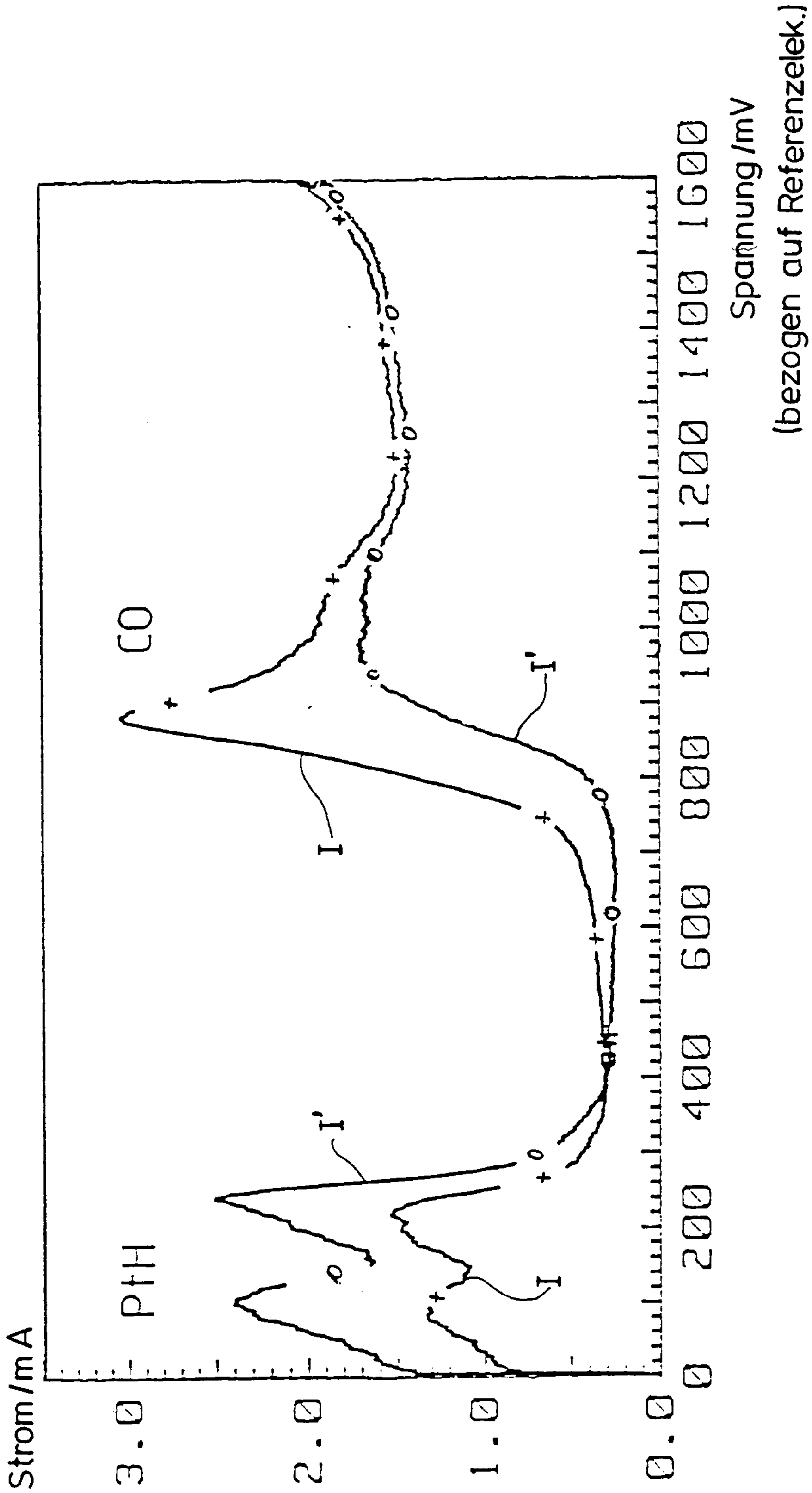
Strom/mA
3.0
2.0
1.0
0.0
0
200
400
600
800
1000
1200
1400
1600
Spannung/mV
(bezogen auf Referenzelek.)
PtH
CO
I
I'
I
I'

Fig.5

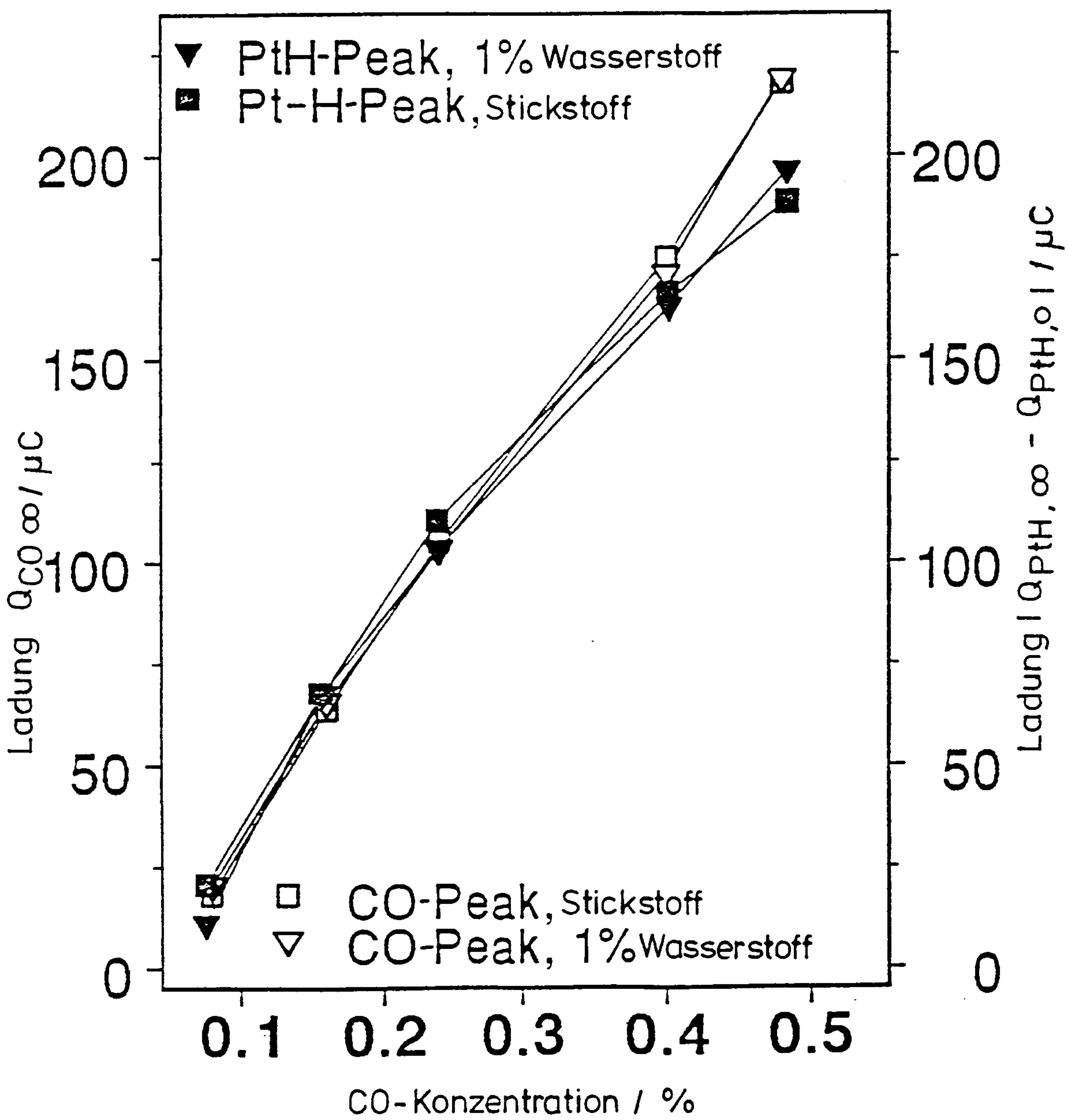
PtH-Peak, 1% Wasserstoff
Pt-H-Peak, Stickstoff
CO-Peak, Stickstoff
CO-Peak, 1% Wasserstoff
200
150
100
50
0
Ladung $Q_{CO\infty}$ / μC
Ladung | $Q_{PtH,\infty}$ - $Q_{PtH,o}$ | / μC
0.1
0.2
0.3
0.4
0.5
CO-Konzentration / %